# FASCICULE DE BREVET EUROPEEN

(11) **EP 1 393 596 B1**
(45) Date de publication et mention de la délivrance du brevet: **29.06.2005**
(21) Numéro de dépôt: 02735553.6
(22) Date de dépôt: 22.05.2002
(51) Int. Cl.: H05B 33/12, H05B 33/02

(54) **VITRE AVEC UN REVETEMENT OPAQUE**
SCHEIBE MIT EINER OPAQUEN BESCHICHTUNG
GLASS PANE WITH OPAQUE COATING

(30) Priorité: 01.06.2001 DE 10126868
(43) Date de publication de la demande: 03.03.2004
(73) Titulaire: Saint-Gobain Glass France, 92400 Courbevoie (FR)
(72) Inventeur: REUL, Bernhard, 52134 Herzogenrath (DE); OFFERMANN, Volkmar, 52249 Eschweiler (DE); MERCKS, Horst, 52068 Aachen (DE); GOERENZ, Walter, 52477 Alsdorf (DE); LINNHÖFER, Dieter, 52222 Stolberg (DE)
(74) Mandataire: Colombier, Christian
(86) Numéro de dépôt international: PCT/FR2002/001719
(87) Numéro de publication internationale: WO 2002/098179

(56) Documents cités:
- EP-A- 0 267 331
- DE-A- 19 902 727

## Description

L'invention se rapporte à une vitre avec un revêtement opaque comprenant une zone de surface qui présente des portions de surface opaques et qui est percée par des portions de surface laissant passer la lumière et réparties en surface.

Pour des vitres (de fenêtres), il est connu (DE-C2-37 08 577) de réduire ou de délimiter leurs portions de surface transparentes par des revêtements opaques (en particulier par des motifs ou des trames opaques imprimé[s] par sérigraphie et cuit[e]s). De telles vitres sont largement utilisées pour les vitres dites de toit ouvrant dans les véhicules automobiles, où les motifs imprimés, respectivement leurs portions (de surface) opaques servent d'écran solaire et thermique. Des revêtements opaques réticulés cachent des bandes de colle et aussi d'autres pièces, qui sont fixées aux vitres ou intégrées dans des vitres (feuilletées). On connaît enfin (DE-C2-40 33 188) des pare- brise de véhicules avec une trame imprimée prévue pour former un écran de protection dans la région entre les pare-soleil rabattables.

Par EP-A1-0 267 331, on connaît une vitre feuilletée pour des véhicules avec un symbole noyé dans la couche adhésive composite, qui est représenté par un élément lumineux électroluminescent ou qui peut illuminé par l'arrière. Les conducteurs électriques nécessaires sont représentés de façon pratiquement invisible par des voies ou des couches conductrices transparentes à l'intérieur du composite. Après enclenchement de la tension d'alimentation, le symbole lumineux semble flotter dans la vitre sans conducteurs visibles. Le document mentionné divulgue deux types différents d'éléments lumineux. Dans le premier, les deux électrodes de transport du courant sont prévues sur le même substrat et sont enjambées par l'élément lumineux, qui comprend à son tour une électrode de croisement. Au point de vue électrique, on forme ainsi deux capacités montées en série. Dans le second type, une des deux électrodes est chaque fois placée en guise de couche mince transparente sur les deux surfaces intérieures de la vitre feuilletée et l'élément lumineux est disposé entre celles-ci. On y décrit aussi l'option, selon laquelle la sortie de lumière à travers une des vitres peut être empêchée au moyen d'un revêtement opaque.

Les principes de base de l'électroluminescence sont connus depuis longtemps. Une documentation détaillée de cette technologie avec des exemples d'application, des descriptions de matières et les teintes de lumière réalisables est disponible à l'adresse internet "http://www.dupont.com/mcm/luxprint/about.html", (état: mai 2001), de sorte qu'il n'y a lieu de ne considérer brièvement ici que des détails.

A partir de deux couches conductrices, dont au moins une est transparente/laisse passer la lumière, on produit un condensateur. Sur l'électrode transparente, on introduit dans le condensateur une couche (opaque) avec des pigments lumineux et une couche isolante (diélectrique). Si l'on applique aux deux électrodes de cet élément une tension alternative (usuellement 100 V ~), celle-ci excite dans les pigments lumineux des courants qui créent à leur tour, par des processus de dispersion, une lumière qui sort par l'électrode transparente.

Les couches d'électrodes ainsi que la couche électroluminescente elle-même et la couche diélectrique peuvent être déposées par sérigraphie en couche épaisse sur des supports appropriés, comme le verre, les films de PET. Par cet effet connu, on obtient des effets lumineux de surface, qui peuvent être utilisés pour de multiples applications (éclairage, logos, signalisation lumineuse), si l'on s'accommode de la densité de lumière relativement faible et du choix de couleurs limité par les matériaux utilisables. En outre, les éléments électroluminescents (dans la suite éléments lumineux) ne sont pas transparents par eux-mêmes, de sorte qu'une face pourvue de ceux-ci ne laisse pas passer de lumière (du jour) .

L'invention a pour objet d'assigner une fonction supplémentaire à un revêtement opaque, structuré avec des portions de surface transparentes réparties en surface, d'une vitre (de fenêtre) transparente.

Conformément à l'invention, cet objectif est atteint par le fait qu'au moins un élément lumineux électroluminescent plat à plusieurs couches, dont une électrode transparente, est disposé dans au moins une partie des portions de surface opaques de la zone de surface, lequel élément, après l'application d'une tension d'alimentation électrique sur le côté de l'électrode transparente, rayonne de la lumière par au moins une des faces de la vitre.
De cette manière, la vitre qui sert par exemple d'écran solaire ou thermique en journée à la lumière du jour, peut aussi servir par faible luminosité de système d'éclairage selon toute sa surface sans qu'aucune zone d'ombre ne soit présente puisque la lumière émise par l'élément électroluminescent passe de façon homogène au travers des portions de surface ouvertes et est diffusée également de façon homogène au travers des portions de surface opaques.
Les caractéristiques des revendications secondaires portent sur des variantes avantageuses de cet objet.

Suivant celui-ci, à au moins une partie des portions de surface opaques du revêtement est associé au moins un élément électroluminescent étendu en plusieurs couches (élément lumineux) avec au moins une électrode transparente, qui émet de la lumière sur (au moins) une des faces plates de la vitre après l'application d'une tension électrique. Ainsi, la vitre laisse passer la lumière dans les portions de surface transparentes et rayonne en même temps de la lumière, sous l'application d'un courant, par ses portions de surface non transparentes - qui forment en même temps la surface de l'élément lumineux. La couche électroluminescente elle-même est opaque, comme on l'a déjà mentionné. Elle ne doit pas être combinée avec un autre revêtement opaque.

Une vitre de ce type a un effet étonnant aux points de vue visuel et esthétique - la portion de surface réputée " sombre" rayonne à présent elle-même de la lumière. On peut prévoir plusieurs éléments lumineux l'un à côté de l'autre à allumer séparément dans différentes zones de la surface, les électrodes et les raccords d'arrivée du courant pouvant être masqués de façon relativement simple sous le revêtement opaque.
Dans ce cas, l'électrode laissant passer la lumière peut éventuellement être utilisée en commun (masse) pour tous les éléments lumineux. On peut ainsi obtenir différents effets lumineux, ou aussi commander l'intensité de la lumière en plusieurs degrés (en fonction de la surface respective à éclairer et éventuellement de sa couleur de lumière).

Dans le cas d'application mentionné, une telle vitre de fenêtre partiellement transparente peut remplacer un éclairage intérieur particulier dans un véhicule automobile, comme vitre de toit dans une automobile dans l'état enclenché de l'élément lumineux et avec une surface, respectivement une intensité lumineuse suffisante, une certaine quantité de lumière pouvant cependant encore pénétrer par le haut à travers le toit vitré pendant la journée.

Une condition préalable pour ce double effet est naturellement que, dans les portions de vitre laissant passer la lumière, on assure une transparence aussi élevée que possible non perturbée par des structures de conducteurs ou analogues. Une telle structure à fine résolution peut être créée d'une façon reproductible simple et fiable par le procédé connu de sérigraphie. Il importe naturellement que les différentes couches de l'élément lumineux soient imprimées en superposition très précise dans la région de la trame. Ceci constitue cependant aussi un processus industriel bien maîtrisé.

Des effets lumineux du type précité peuvent naturellement aussi être obtenus sur toutes les autres vitres (feuilletées), qui sont pourvues d'une telle trame imprimée partiellement transparente, ainsi par exemple dans la région des pare-soleil, si l'on accepte les frais plus élevés imposés par la réalisation des impressions multiples et des raccordements électriques.

Il n'est certes pas obligatoirement nécessaire de noyer un tel élément lumineux dans une vitre feuilletée, mais on préférera cette disposition pour des raisons de sécurité en ce qui concerne la tension d'alimentation de niveau assez élevé. La pose noyée dans une vitre feuilletée protège en outre l'élément lumineux contre des actions mécaniques ainsi que contre la pénétration d'humidité et de souillures.

La matière de la vitre elle-même est en principe choisie librement; on peut utiliser indifféremment des vitres en plastique ou en verre. De même, des composites hybrides peuvent être fabriqués industriellement de façon connue.

Il est également en principe indifférent que l'élément lumineux soit appliqué, respectivement imprimé, directement sur une surface d'une telle vitre, ou qu'il soit réalisé sur un substrat de support séparé, comme par exemple un film de PET, qui sera ensuite, de façon adéquate, assemblé à la vitre rigide, respectivement incorporé dans un composite lamellé.

De même, on peut choisir librement le rapport entre la surface de l'élément lumineux et la surface totale de la vitre, respectivement de ladite zone de surface du revêtement opaque structuré. Au besoin, on peut disposer l'un à côté de l'autre plusieurs éléments lumineux présentant le cas échéant des couleurs et des formes différentes.

Enfin, il peut également être intéressant pour certains cas d'application de faire rayonner de la lumière par un ou plusieurs éléments lumineux électroluminescents sur les deux faces de la vitre. On n'a alors pas besoin d'un revêtement opaque distinct, parce que les couches électroluminescentes elles-mêmes ne laissent pas passer de lumière visible. En principe, on peut aussi "empiler" l'un sur l'autre plusieurs éléments lumineux électroluminescents de cette nature, le cas échéant avec des orientations opposées l'une à l'autre, en n'utilisant éventuellement qu'une seule électrode intermédiaire commune.

On pourrait obtenir un autre effet lumineux particulier, en enfermant certes l'élément lumineux dans une vitre feuilletée mais en ne disposant pas le revêtement opaque directement.sur la couche d'électrode, mais de l'autre côté de la vitre extérieure sur la surface extérieure de celle-ci (et en lui conférant par exemple par cuisson une résistance mécanique suffisante). Une certaine fraction de lumière non dirigée pourrait encore sortir, par dispersion latérale, éventuellement par des portions de surface de ce revêtement opaque qui laissent passer la lumière.

D'autres détails et avantages de l'objet de l'invention apparaîtront par le dessin d'un exemple de réalisation et par sa description détaillée qui suit.

Dans les dessins en représentation simplifiée, la
- Fig. 1: est une vue d'une vitre avec un revêtement opaque avec une structure en forme de trame; et la
- Fig. 2: montre, dans une coupe à travers la vitre de la figure 1 le long de la ligne II-II, la structure de principe des couches de cette vitre feuilletée équipée d'un élément lumineux électroluminescent conformément à l'invention.

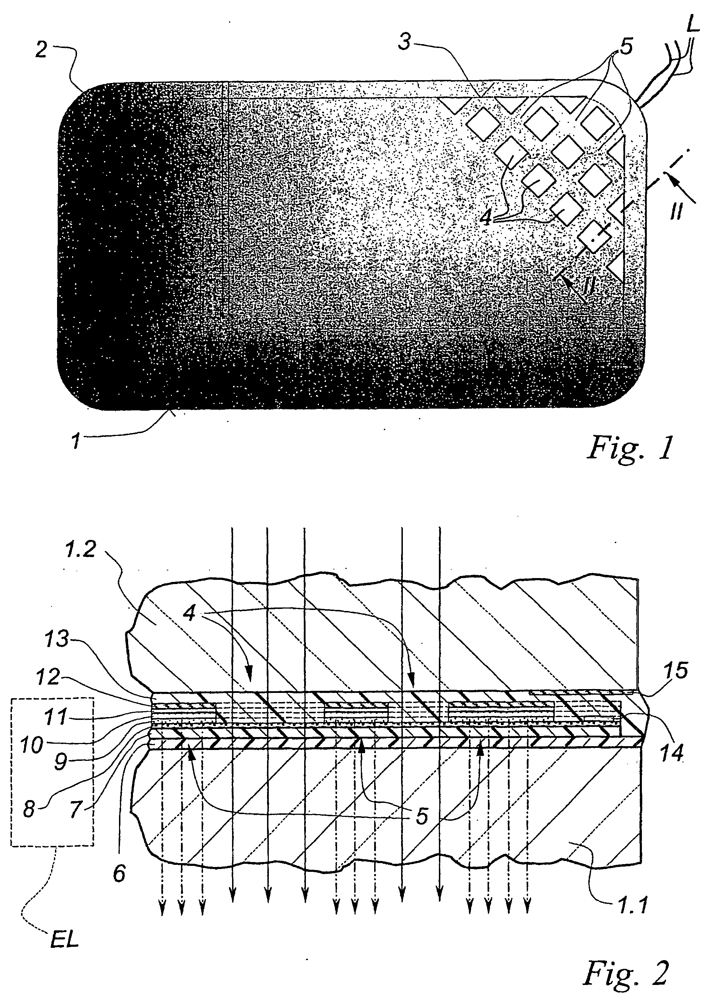

Suivant la figure 1, une vitre 1 transparente par nature est pourvue d'un revêtement opaque 2. Dans une zone de surface 3 (entourée par une ligne interrompue pour plus de clarté), ce dernier est percé de portions de surface 4 laissant passer la lumière, donc transparentes, réparties uniformément en surface, qui alternent avec des portions de surface opaques 5, tout en considérant d'ailleurs ici que toute la zone de surface 3 est garnie du motif illustré.

La trame régulière représentée ici et sa taille par rapport à la surface de la vitre ne constitue cependant qu'un exemple de réalisation ou de disposition. Par la sérigraphie, on peut réaliser pratiquement toute autre combinaison désirée, en particulier de surface irrégulière, de portions de surface opaques et transparentes. Les portions de surface opaques ne doivent pas nécessairement être jointives, dans le cadre de l'invention. On reviendra encore sur cet aspect plus loin.

Au moins une partie des portions de surface opaques 5 est à présent couplée à un élément lumineux électroluminescent, dont la présence est indiquée par deux fils de raccordement électrique L. Sa structure sera à présent décrite plus en détail en faisant référence à la figure 2.

En coupe transversale, la surface d'une première vitre (en verre) transparente 1.1 (qui en position montée est tournée vers un espace à éclairer) est suivie d'abord par une couche de colle 6 en polyvinyl butyral (PVB), qui est assemblée à un film de PET 7 (de préférence sous forme de film contrecollé au préalable). Les deux films 6 et 7 sont transparents.

Le film de PET 7 est de préférence revêtu en continu (de façon connue en soi) avec une couche conductrice transparente 8, par exemple en oxyde d'étain-indium (ITO), qui constitue une des électrodes pour un élément lumineux électroluminescent EL. A la couche de ITO 8 succède la couche électroluminescente 9 déposée conformément au motif ou à l'agencement désiré, sur laquelle est à nouveau déposée une couche diélectrique (électriquement non conductrice) 10.

Cette dernière est suivie d'une couche d'électrode hautement conductrice 11, par exemple en argent métallique. Une telle couche d'argent a un effet bien connu de miroir thermique, c'est-à-dire qu'elle possède une forte réflexion infrarouge. Précisément dans le cas d'emploi comme vitre de toit dans des véhicules, cet effet de protection thermique peut être exploité de façon avantageuse.

La couche d'électrode 11 est encore couverte d'une couche de couleur opaque 12, qui empêche la sortie de la lumière rayonnée par l'élément lumineux électroluminescent vers cette face et a aussi un effet d'atténuation du passage de chaleur et de lumière vers l'intérieur. Elle a aussi un aspect décoratif. La couche de couleur 12 peut être supprimée, si la lumière doit être émise vers les deux faces de la vitre 1, respectivement lorsque par exemple la couche d'électrode 11 doit avoir un certain effet de miroir. L'opacité du revêtement dans les portions de surface opaques n'est alors assurée que par la couche électroluminescente, le cas échéant avec le concours de la couche diélectrique et de la couche d'électrode structurée.

Le film de PET 7, la couche conductrice transparente 8, la couche électroluminescente 9, la couche diélectrique 10 et la couche d'électrode conductrice 11, dont les repères numériques sont rassemblés dans un cadre finement tracé en traits interrompus par souci de clarté, forment les composants minimum de l'élément lumineux électroluminescent EL, abstraction faite des fils de raccordement électrique.

Sa fabrication peut être conduite de la façon suivante: d'abord, on dépose sur le substrat de PET 7 (au choix aussi directement sur une surface d'une vitre rigide) le revêtement conducteur transparent 8 (par exemple par pulvérisation). Le motif ou l'agencement désiré avec la couche électroluminescente 9 est alors réalisé, de préférence par surimpression en couche épaisse, et ensuite la couche diélectrique 10. On dépose ensuite sur la couche diélectrique la contre-électrode 11.
Celle-ci devrait être menée jusqu'à proximité du bord de la vitre 1, en au moins un endroit, pour pouvoir y réaliser d'une façon relativement simple le raccordement électrique.

Pour éviter les courts-circuits, il est obligatoirement nécessaire que la couche diélectrique 10 couvre au moins la même surface que la contre-électrode 11.
Donc, si la couche diélectrique 10 elle-même ne couvre pas pleinement la surface, mais est structurée suivant un motif comme dans la représentation, la contre-électrode 11 doit aussi être structurée de la même façon, afin qu'elle ne puisse pas entrer en court-circuit avec l'électrode transparente 8. Si les couches 10 et 11 s'étendent au contraire également sur les portions de surface transparentes 4 de la zone de surface 3, à la différence du dessin, elles doivent alors naturellement être elles-mêmes suffisamment transparentes.

La portion de surface de la couche électroluminescente 9 peut cependant être plus petite que les surfaces de la couche diélectrique 10 et de la contre-électrode 11. Les zones de surface opaques (de la couche électroluminescente 9) ne doivent pas encore une fois être réticulées directement l'une avec l'autre, mais elles peuvent être configurées par exemple même sous la forme d'une trame de points. Si le diélectrique n'est pas transparent, on doit alors évider les portions de surface laissant passer la lumière en imprimant par exemple la couche électroluminescente et le diélectrique avec la même structure de surface, tandis que l'électrode est réalisée en pleine surface. Chaque point forme alors un condensateur lumineux propre de faible étendue, et il est alors possible de rayonner des couleurs de lumières différentes même avec un choix de matières différent (ce qui suppose cependant plusieurs opérations de sérigraphie). S'il faut empêcher la sortie de lumière à travers le diélectrique, il faudrait ensuite tout au plus encore une impression de masquage opaque correspondant au motif de la couche électroluminescente.

En faisant référence au motif illustré dans la figure 1, on pourrait par exemple aussi imaginer de ne garnir que les régions de croisement de la trame avec la couche électroluminescente.

Le composite est complété par une autre couche, respectivement un autre film de PVB 13 et une seconde vitre (de verre) 1.2 assemblée à celle-ci. On reconnaît que la couche de PVB 13 se relie à la couche 6 de même matière par fusion au bord de la vitre 1.
Ainsi, la région intérieure du composite est scellée de façon pratiquement hermétique contre l'humidité et les souillures. Les deux couches de PVB 6 et 13 doivent être considérées ensemble comme formant la couche intermédiaire de collage de la vitre feuilletée.

En outre, tous les espaces intermédiaires dans la structure de la couche électroluminescente sont remplis de PVB. Des lignes en traits interrompus entre les diverses portions de couches coupées indiquent les prolongements continus des couches respectives derrière le plan de coupe.

Les proportions de taille, respectivement d'épaisseur, sont ici fortement déformées, car en réalité les couches 8 à 12 sont beaucoup plus minces que les couches de PVB 6 et 13. De même, le film de PET 7 est en réalité nettement plus mince qu'un film de PVB, mais encore plus épais que les couches 8 à 12.

Sur la couche d'électrode transparente 8, on a indiqué à proximité du bord de la vitre 1 une voie conductrice de raccordement électrique 14, qui est déposée de façon connue (sous forme de mince bande de métal ou comme voie conductrice imprimée) sur la couche 8, et qui peut être raccordée vers l'extérieur (au moyen des conducteurs L illustrés dans la figure 1), afin de réaliser l'alimentation électrique de l'élément lumineux électroluminescent. Dans une autre variante, on peut encore déposer sur la face intérieure de la vitre 1.2 un revêtement opaque en forme de cadre 15, pour masquer en périphérie les régions de bord de la vitre.

Enfin, des flèches désignent les passages de lumière (portions de surface transparentes 4) respectivement les rayons lumineux à émettre par l'élément lumineux électroluminescent (portions de surface opaques 5). On reconnaît que ces derniers passent à travers l'électrode transparente 8 ainsi que des films 6 et 7 et de la vitre 1.1 et sortent par la face de cette dernière.

Les deux électrodes 8 et 11, qui sont dans tous les cas isolées électriquement l'une par rapport à l'autre de façon sûre par la couche diélectrique 10, peuvent, de façon appropriée et connue en soi, être chacune séparément raccordées électriquement aux fils de sortie L et être menées vers l'extérieur. Les technologies correspondantes ont déjà été décrites à de nombreuses reprises et ne doivent pas être exposées en détail ici.

Dans une variante de l'élément lumineux électroluminescent EL connue en principe par EP-A1-0 267 331, on pourrait aussi imaginer de diviser en une ou plusieurs zones la couche de ITO 8 déposée sur le film de PET 7 et de relier les zones de surface ainsi formées chaque fois par paires à des pôles différents de la tension d'alimentation. La couche d'électrode, c'est-à-dire la contre-électrode 11, servirait alors de façon connue d'électrode de pontage chaque fois entre deux éléments lumineux montés électriquement en série. Sa résistance de surface devrait alors être aussi faible que possible. Une couche d'argent pourrait convenir à cette fin. Cette configuration a l'avantage que tous les raccords électriques extérieurs ne doivent se trouver que dans un seul plan.

## Revendications

1. Vitre (1) avec un revêtement opaque (2) comprenant une zone de surface (3) qui présente des portions de surface opaques (5) et qui est percée par des portions de surface (4) laissant passer la lumière et réparties en surface, **caractérisée en ce qu'**au moins un élément lumineux électroluminescent (EL) plat à plusieurs couches, dont une électrode transparente (8), est disposé dans au moins une partie des portions de surface opaques (5) de la zone de surface (3), lequel élément, après l'application d'une tension d'alimentation électrique rayonne de la lumière sur le côté de l'électrode transparente (8), par au moins une des faces de la vitre (1).

2. Vitre suivant la revendication 1, qui comprend, sous forme de vitre feuilletée, au moins deux vitres rigides (1.1, 1.2) et une couche intermédiaire (6, .13) assemblant celles-ci l'une à l'autre, dans laquelle le revêtement opaque et l'élément lumineux (EL) sont noyés dans la couche intermédiaire (6, 13) ou sont disposés sur une face d'une des vitres rigides, située à l'intérieur de la vitre feuilletée.

3. Vitre suivant la revendication 1 ou 2, **caractérisée en ce que** les portions de surface laissant passer la lumière (4) sont réparties selon un motif régulier/une trame régulière entre les portions de surface opaques (5).

4. Vitre suivant l'une quelconque des revendications précédentes, **caractérisée en ce que** l'élément lumineux (EL) est disposé sur un film de support spécifique (7).

5. Vitre suivant l'une quelconque des revendications précédentes, **caractérisée en ce que** les portions de surface opaques (5) sont pourvues d'un revêtement opaque (12) masquant l'élément lumineux (EL) sur une face.

6. Vitre suivant l'une quelconque des revendications précédentes, **caractérisée en ce qu'**une couche diélectrique (10) et une contre-électrode (11) de l'élément lumineux (EL) sont constituées par des couches transparentes de pleine surface et masquent aussi les portions de surface laissant passer la lumière (4) de la zone de surface (3).

7. Vitre suivant l'une quelconque des revendications précédentes, **caractérisée en ce que** la couche électroluminescente (9) de l'élément lumineux électroluminescent (EL) est divisée de façon discontinue en plusieurs portions de surface disposées conformément à un motif, respectivement à l'agencement désiré, avec au moins une électrode utilisée en commun pour plusieurs de ces portions de surface.

8. Vitre suivant la revendication 7, **caractérisée en ce que** la couche électroluminescente (9) est disposée en une trame à points.

9. Vitre suivant l'une quelconque des revendications précédentes, **caractérisée en ce qu'**il est prévu l'un à côté de l'autre plusieurs éléments lumineux électroluminescents à enclencher indépendamment l'un de l'autre, qui ont une électrode (de masse) commune.

10. Vitre suivant l'une quelconque des revendications précédentes, **caractérisée en ce qu'**il est prévu l'un au-dessus de l'autre au moins deux éléments lumineux électroluminescents à enclencher indépendamment l'un de l'autre, qui ont une électrode centrale commune.

## Patentansprüche

1. Scheibe (1) mit einer opaken Beschichtung (2), die einen Flächenabschnitt (3) mit opaken Flächenanteilen (5) umfasst und die mit flächig verteilten Licht durchlassenden Flächenanteilen (4) durchsetzt ist, **dadurch gekennzeichnet, dass** zumindest in einem Teil der opaken Flächenanteile (5) des Flächenabschnitts (3) mindestens ein flächiges mehrschichtiges Elektrolumineszenz-Leuchtelement (EL) mit einer transparenten Elektrode (8) angeordnet ist, welches Element nach Anlegen einer elektrischen Speisespannung Licht auf der Seite der transparenten Elektrode (8) von einer der Flächenseiten der Scheibe (1) abstrahlt.

2. Scheibe nach Anspruch 1, welche als Verbundscheibe mindestens zwei starre Scheiben (1.1, 1.2) und eine diese miteinander verbindende Zwischenschicht (6, 13) umfasst, wobei die opake Beschichtung und das Leuchtelement (EL) in die Zwischenschicht (6, 13) eingebettet oder auf einer im Verbund innen liegenden Fläche einer der starren Scheiben angeordnet sind.

3. Scheibe nach Anspruch 1 oder 2, **dadurch gekennzeichnet, dass** die Licht durchlassenden Flächenanteile (4) in einem regelmäßigen Muster / Raster zwischen den opaken Flächenanteilen (5) verteilt sind.

4. Scheibe nach einem der vorstehenden Ansprüche, **dadurch gekennzeichnet, dass** das Leuchtelement (EL) auf einer eigenen Trägerfolie (7) aufgebaut ist.

5. Scheibe nach einem der vorstehenden Ansprüche, **dadurch gekennzeichnet, dass** die opaken Flächenanteile (5) mit einer das Leuchtelement (EL) zu einer Seite hin abdeckenden opaken Beschichtung (12) versehen sind.

6. Scheibe nach einem der vorstehenden Ansprüche, **dadurch gekennzeichnet, dass** eine dielektrische Schicht (10) und eine Gegenelektrode (11) des Leuchtelements (EL) als transparente Schichten vollflächig ausgeführt sind und auch die Licht durchlassenden Flächenanteile (4) des Flächenabschnitts (3) überdecken.

7. Scheibe nach einem der vorstehenden Ansprüche, **dadurch gekennzeichnet, dass** die Elektrolumineszenz-Schicht (9) des Elektrolumineszenz-Leuchtelements (EL) diskontinuierlich in mehrere entsprechend dem gewünschten Muster bzw. Layout angeordnete Flächenanteile mit mindestens einer für mehrere dieser Flächenanteile gemeinsam verwendeten Elektrode unterteilt ist.

8. Scheibe nach Anspruch 7, **dadurch gekennzeichnet, dass** die Elektrolumineszenz-Schicht (9) in einem Punktraster angeordnet ist.

9. Scheibe nach einem der vorstehenden Ansprüche, **dadurch gekennzeichnet, dass** mehrere unabhängig voneinander einschaltbare Elektrolumineszenz-Leuchtelemente nebeneinander vorgesehen sind, welche eine gemeinsame (Masse-)Elektrode haben.

10. Scheibe nach einem der vorstehenden Ansprüche, **dadurch gekennzeichnet, dass** mindestens zwei unabhängig voneinander einschaltbare Elektrolumineszenz-Leuchtelemente übereinander vorgesehen sind, welche eine gemeinsame Mittelelektrode haben.

## Claims

1. A window (1) with an opaque coating (2) comprising a surface region (3) which has opaque surface portions (5) and which is perforated by surface portions (4) allowing light to pass through and distributed over the surface, **characterized in that** at least one flat electroluminescent light element (EL) with several layers, including a transparent electrode (8), is placed in at least some of the opaque surface portions (5) of the surface region (3), which element, after applying an electrical supply voltage, radiates light to the side of the transparent electrode (8), through at least one of the faces of the window (1).

2. The window as claimed in claim 1, which comprises, in the form of a laminated window, at least two rigid panes (1.1, 1.2) and an intermediate layer (6, 13) assembling them to each other, in which the opaque coating and the light element (EL) are embedded in the intermediate layer (6, 13) or are arranged on one face of one of the rigid panes, located inside the laminated window.

3. The window as claimed in claim 1 or 2, **characterized in that** the surface portions (4) allowing light to pass through are distributed according to a regular design/a regular pattern between the opaque surface portions (5).

4. The window as claimed in any one of the preceding claims, **characterized in that** the light element (EL) is arranged on a special support film (7).

5. The window as claimed in any one of the preceding claims, **characterized in that** the opaque surface portions (5) are provided with an opaque coating (12) masking the light element (EL) on one face.

6. The window as claimed in any one of the preceding claims, **characterized in that** a dielectric layer (10) and a counter electrode (11) of the light element (EL) consist of transparent layers directly on the surface also masking the surface portions allowing light (4) to pass through the surface region (3).

7. The window as claimed in any one of the preceding claims, **characterized in that** the electroluminescent layer (9) of the electroluminescent light element (EL) is divided discontinuously into several surface portions arranged according to a design, or in the desired arrangement, with at least one electrode used in common for several of these surface portions.

8. The window as claimed in claim 7, **characterized in that** the electroluminescent layer (9) is arranged in a dot pattern.

9. The window as claimed in any one of the preceding claims, **characterized in that** several electroluminescent light elements are provided side by side to be triggered independently of each other, and which have a common (ground) electrode.

10. The window as claimed in any one of the preceding claims, **characterized in that** at least two electroluminescent light elements are provided one above the other to be triggered independently of each other and which have a common central electrode.
